# EUROPEAN PATENT APPLICATION

(11) **EP 2 629 114 A1**
(43) Date of publication of application: **21.08.2013**
(21) Application number: 12155876.1
(22) Date of filing: 17.02.2012
(51) Int. Cl.: G01S 11/16, G01S 5/28, G01S 5/30

(54) **Positioning system for detecting position of cleansing device**

(71) Applicant: Egenpower Inc., Laguna Niguel, CA 92677 (US)
(72) Inventor: Li, Gary, DONG GUAN CITY (CN)
(74) Representative: Becker Kurig Straus

(57) **Abstract**

A positioning system for detecting the position of a cleansing device (10) is provided. The positioning system includes a cleansing device (10) and a base station (12). The cleansing device (10) includes a controlling unit (102), a cleaning module (104), a first emitting unit (106), and a second emitting unit (108). The controlling unit (102) controls cleansing operation performed on a cleansing region taken care by the cleaning module (104), controls the first emitting unit (106) to emit an initial signal (RS), and controls the second emitting unit (108) to emit an ultrasonic signal (UWS). The base station (12) includes a first receiving unit (122), two second receiving units (124,126), and a computing unit (120). The first receiving unit (122) receives the initial signal (RS). The second receiving units (124,126) receive the ultrasonic signal (UWS). The computing unit (120) computes the position of the cleansing device (10) according to the initial signal (RS) received and the point in time when the ultrasonic signal (UWS) is received.

## Description

### BACKGROUND OF THE INVENTION

1. Technical Field

The present invention relates to environmental cleansing devices, and more particularly, to a positioning system for detecting the position of a cleansing device.

2. Description of Related Art

A vacuum cleaner is an important tool of cleansing an indoor environment. To operate a conventional vacuum cleaner, a user has to hold the body of the vacuum cleaner with one hand and hold the mouth of the vacuum cleaner with the other hand. Doing a long cleansing session in the aforesaid manner is hard work. Also, the conventional vacuum cleaner lacks ease of use, because it comes with a short power line, and thus the user has to change electric outlets in order to continue with the cleansing process.

US5,621,291 discloses a method of controlling a vacuum cleaner and specifically discloses that the vacuum cleaner is effective in overcoming drawbacks of the prior art and effectuating environmental cleaning.

US7,328,088 discloses a method and apparatus for detecting a position of a vacuum cleaner and specifically discloses that, during operation, generators generate an infrared signal and an ultrasonic signal and then generate another ultrasonic signal. In practice, it is impossible for the two ultrasonic signals to be generated simultaneously, because the two ultrasonic signals generated simultaneously interfere with each other and thus affect the ensuing position judgment. Furthermore, there is a time difference between the transmission of the two ultrasonic signals, whereas the vacuum cleaner is moving continuously. Hence, the vacuum cleaner is not at the same position when it receives the two ultrasonic signals, thereby resulting in an error of the detection of the position of the vacuum cleaner.

### SUMMARY OF THE INVENTION

The present invention provides a positioning system for detecting the position of a cleansing device. The positioning system comprises a cleansing device and a base station. The cleansing device comprises a body, a controlling unit, a cleaning module, a first emitting unit, and a second emitting unit. The controlling unit, the cleaning module, the first emitting unit, and the second emitting unit are disposed on the body. The controlling unit is connected to the cleaning module, the first emitting unit, and the second emitting unit. The controlling unit controls the cleansing operation performed on a cleansing region taken care by the cleaning module, controls the first emitting unit to emit an initial signal, and controls the second emitting unit to emit an ultrasonic signal. The ultrasonic signal is transmitted at a transmission speed. The base station comprises a first receiving unit, two second receiving units, and a computing unit. The first receiving unit is connected to the computing unit and receives the initial signal. The two second receiving units are connected to the computing unit for receiving the ultrasonic signal, and are separated by a constant distance. The computing unit computes the position of the cleansing device according to the initial signal received by the first receiving unit and the point in time when the ultrasonic signal is received by each of the two second receiving units.

The primary objective of the present invention is to provide a positioning system for detecting the position of a cleansing device. The cleansing device takes the initiative in emitting an initial signal and an ultrasonic signal. The positioning system computes the position of the cleansing device relative to the base station according to the point in time when the signals are received by two second receiving units and a first receiving unit of a base station of the positioning system.

### BRIEF DESCRIPTION OF THE SEVERAL VIEWS OF THE DRAWINGS

Technical features of the present invention are hereunder illustrated with a preferred embodiment in conjunction with the accompanying drawings, in which:

FIG 1 is a schematic block diagram of a positioning system for detecting the position of a cleansing device according to the present invention;

FIG 2 is a schematic view of the relative positions of a cleansing device and a base station mentioned in FIG 1;

FIG 3 is a timing diagram of receiving signals by a first receiving unit and two second receiving units;

FIG 4 is a flow chart of computation performed by a computing unit of the base station;

FIG 5 is a timing diagram of emitting signals by a first emitting unit and a second emitting unit of the cleansing device; and

FIG 6 is a timing diagram of receiving the signals of FIG 5 by the first receiving unit and the two second receiving units.

### DETAILED DESCRIPTION OF THE EMBODIMENTS OF THE INVENTION

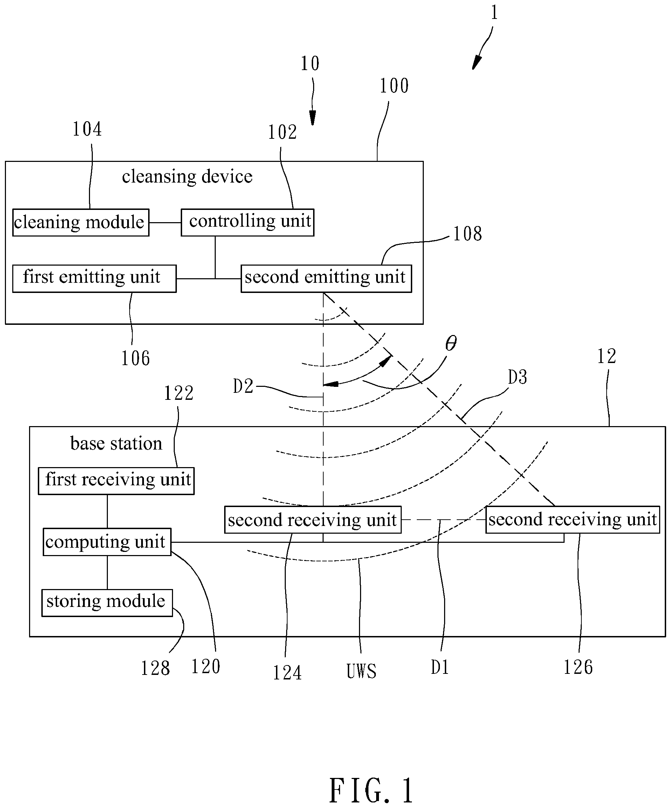

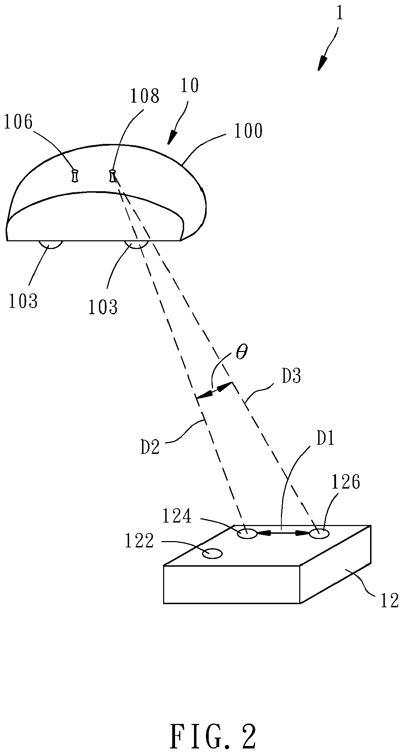

Referring to FIG 1 and FIG 2, there are shown diagrams of a positioning system 1 for detecting the position of a cleansing device according to a preferred embodiment of the present invention. The positioning system 1 comprises a cleansing device 10 and a base station 12. In this embodiment, the cleansing device 10 is exemplified by a vacuum cleaner.

The cleansing device 10 comprises a body 100, a controlling unit 102, a cleaning module 104, a first emitting unit 106, and a second emitting unit 108. The body 100 is the casing of the cleansing device 10. The controlling unit 102, the cleaning module 104, the first emitting unit 106, and the second emitting unit 108 are disposed on the body 100. The second emitting unit 108 is an ultrasonic signal generator for generating an ultrasonic signal UWS. The ultrasonic signal UWS is subject to no directional limitation.

The controlling unit 102 controls the cleansing operation performed on a cleansing region taken care by the cleaning module 104. Take a vacuum cleaner as an example, a suction unit (not shown) of the cleaning module 104 picks up dust, gravel, and hair on the floor by suction, and then the cleaning module 104 takes over the dust, gravel, and hair from the suction unit. The cleaning module 104 has a moving unit 103 for moving the body 100 around within the cleansing region. The moving unit 103 is a wheel or a roller.

The controlling unit 102 further controls the first emitting unit 106 to emit an initial signal, and controls the second emitting unit 108 to emit the ultrasonic signal UWS. As shown in FIG 1, the curved dashed lines depict the propagation of the ultrasonic signal UWS emitted from the second emitting unit 108 and show that the ultrasonic signal UWS is transmitted at a transmission speed so as to propagate outward gradually.

The base station 12 comprises a first receiving unit 122, two second receiving units 124, 126, and a computing unit 120. The first receiving unit 122 is connected to the computing unit 120 for receiving the initial signal. The two second receiving units 124, 126 are connected to the computing unit 120 for receiving the ultrasonic signal UWS. The two second receiving units 124, 126 are separated by a constant distance D1. The computing unit 120 computes the position of the cleansing device 10 according to the initial signal received by the first receiving unit 122 and the point in time when the ultrasonic signal is received by each of the second receiving units 124, 126. As shown in FIG 1, the second receiving unit 124 receives the ultrasonic signal UWS soon, and then the second receiving unit 126 receives the ultrasonic signal UWS. However, in practice, it is also possible for the second receiving unit 126 to receive the ultrasonic signal UWS sooner than the second receiving unit 124 does. Alternatively, it is possible that the two second receiving units 124, 126 receive the ultrasonic signal UWS almost simultaneously.

Referring to FIG 2, with the cleansing device 10 moving around, the controlling unit 102 of the cleansing device 10 controls the first emitting unit 106 to emit an initial signal and controls the second emitting unit 108 to emit an ultrasonic signal. Afterward, the computing unit 120 of the base station 12 computes the position of the cleansing device 10 moving relative to the base station 12 according to the point in time when the first receiving unit 122 receives the initial signal and the point in time when the two second receiving units 124, 126 receive the ultrasonic signal.

In this embodiment, the first emitting unit 106 is an infrared receiver, and the first receiving unit 124 is an infrared receiver.

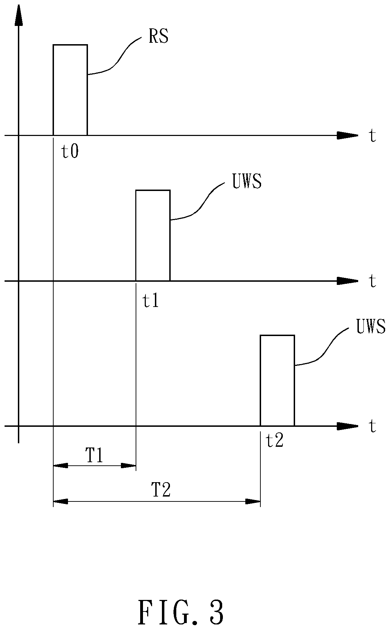

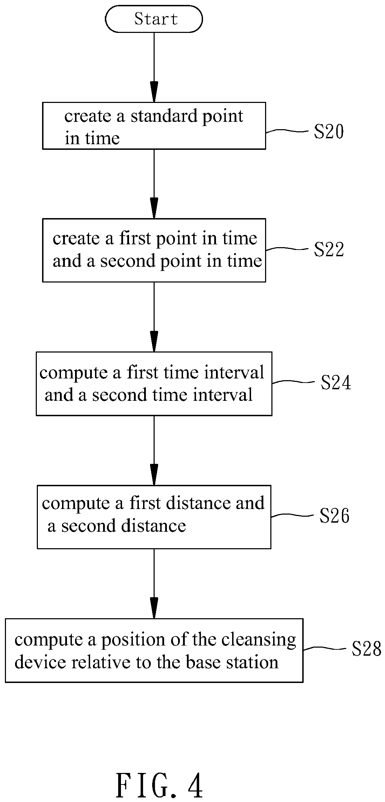

Although the controlling unit 102 controls the first emitting unit 106 to emit the initial signal and controls the second emitting unit 108 to emit the ultrasonic signal UWS simultaneously, the first receiving unit 122 receives the signal sooner than the two second receiving units 124, 126 do, because light travels faster than an ultrasonic wave. Referring to FIG 3 and FIG 4, the computing unit 120 executes a computation procedure. The computation procedure comprises the steps of:

S20: creating a standard point in time t0 according to the point in time when the first receiving unit receives the initial signal RS;

S22: creating a first point in time t1 according to the point in time when one of the two second receiving units receives the ultrasonic signal UWS, and creating a second point in time t2 according to the point in time when one of the two second receiving units receives the ultrasonic signal UWS;

S24: computing a first time interval T1 equal to the time difference between the first point in time t1 and the standard point in time t0, and computing a second time interval T2 equal to the time difference between the second point in time t2 and the standard point in time t0;

S26: computing a first distance D2 equal to the product of the first time interval T1 and the transmission speed of the ultrasonic signal UWS so as to calculate the distance between one of the second receiving units and the cleansing device, and computing a second distance D3 equal to the product of the second time interval T2 and the transmission speed of the ultrasonic signal UWS so as to calculate the distance between the other one of the second receiving units and the cleansing device (see FIG 1); and

S28: computing a position of the cleansing device relative to the base station according to the distance between the two second receiving units and the relation between the first distance and the second distance.

The computing unit 120 starts to calculate the time taken by the two second receiving units 124, 126 to receive the ultrasonic signal UWS as soon as the first receiving unit receives the initial signal RS. The computing unit 120 calculates the first and second distances D2, D3 according to the first and second time intervals T1, T2 and the transmission speed of the ultrasonic signal UWS. Finally, the computing unit 120 calculates the position of the cleansing device relative to the base station (comprising distances D2, D3 and angle θ) according to the constant distance D 1 between the two second receiving units by means of a trigonometric function of the constant distance D1 between the two second receiving units and the first and second distances D2, D3.

Referring to FIG 1, FIG 5, and FIG 6, an identical delay time DT of the controlling unit 102 and the computing unit 120 is configured. The delay time DT is equal to the time interval between the point in time when the first emitting unit 106 emits the initial signal RS and the point in time when the second emitting unit 108 emits the ultrasonic signal UWS. The step S24 performed by the computing unit 120 and described in FIG 4 further comprises deducting from the first time interval T1 the delay time DT between the first point in time t1 and the standard point in time t0 and deducting from the second time interval T2 the delay time DT between the second point in time t2 and the standard point in time t0.

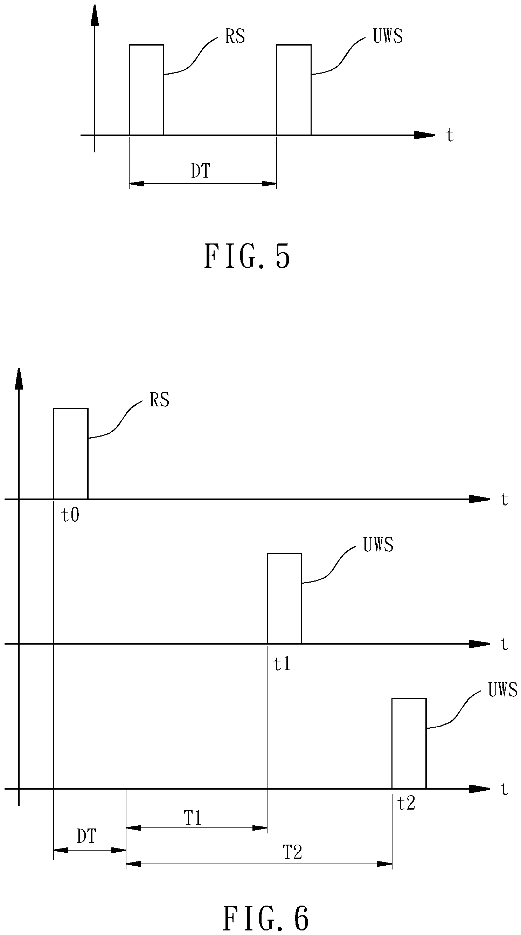

Referring to FIG 6, the second emitting unit 108 emits the ultrasonic signal UWS later than the first emitting unit 106 does, and thus the computation process entails deducting the delay time DT from the first and second time intervals T1, T2 in order to calculate the time actually taken to transmit the ultrasonic signal UWS and enable the computing unit 120 to proceed to step S25 described in FIG 4. For example, if the delay time DT is set to 1 second, the ultrasonic signal UWS will be emitted 1 second later than the initial signal RS, and the computing unit 120 will deduct the delay time DT (i.e., 1 second) from the first and second time intervals T1, T2.

Referring to FIG 1 again, the base station 12 further comprises a storing module 128. The storing module 128 is a hard disk drive or a flash memory. The storing module 128 is connected to the computing unit 120 and stores every position of the cleansing device 10 moving relative to the base station 12. Hence, the record of all the positions of the cleansing device 10 operating within the cleansing region is kept by the storing module 128.

In addition to the aforesaid infrared receiver, the first emitting unit 106 comes in the form of a radio frequency transmitter. The first receiving unit 122 is a radio frequency receiver for receiving a radio frequency signal (i.e., the initial signal) generated by the radio frequency transmitter. The radio frequency signal generated by the radio frequency transmitter is not subject to any directional limitation nor susceptible to barriers, such as terrain or objects (such as furniture), such that the first receiving unit 122 can receive the radio frequency signal efficiently.

In conclusion, the present invention provides a positioning system for detecting the position of a cleansing device. The positioning system comprises a cleansing device and a base station. The cleaning device comprises a body, a controlling unit, a cleaning module, a first emitting unit, and a second emitting unit. The base station comprises a first receiving unit, two second receiving units, and a computing unit. The computing unit starts counting time as soon as the first and second emitting units emit an initial signal and an ultrasonic signal, respectively, and the first receiving unit receives the initial signal. After both the two second receiving units have received the same ultrasonic signal, the computing unit calculates the position of the cleansing device relative to the base station, thereby enhancing positioning precision.

## Claims

1. A positioning system for detecting a position of a cleansing device (10), the positioning system comprising:
a cleansing device (10) comprising a body (100), a controlling unit (102), a cleaning module (104), a first emitting unit (106), and a second emitting unit (108), the controlling unit (102) is being connected to the cleaning module (104), the first emitting unit (106), and the second emitting unit (108), controlling a cleansing operation performed on a cleansing region taken care by the cleaning module (104), controlling the first emitting unit (106) to emit an initial signal, and controlling the second emitting unit (108) to emit an ultrasonic signal, the ultrasonic signal being transmitted at a transmission speed, wherein the controlling unit (102), the cleaning module (104), the first emitting unit (106), and the second emitting unit (108) are disposed on the body (100); and
a base station (12) comprising a first receiving unit (122), two second receiving units (124,126), and a computing unit (120), the first receiving unit (122) being connected to the computing unit (120) and receiving the initial signal, the two second receiving units (124,126) being connected to the computing unit (120) for receiving the ultrasonic signal and being separated by a constant distance, and the computing unit (120) computing the position of the cleansing device (10) according to the initial signal received by the first receiving unit (122) and a point in time when the ultrasonic signal is received by each of the second receiving units (124,126).

2. The positioning system of claim 1, wherein the controlling unit controls the first emitting unit (106) to emit the initial signal and controls the second emitting unit (108) to emit the ultrasonic signal simultaneously, and the computing unit (120) executes a computation procedure comprising the steps of:
creating a standard point in time (t0) according to a point in time when the first receiving unit (122) receives the initial signal (RS);
creating a first point in time (t1) according to a point in time (t2) when one of the two second receiving units (124,126) receives the ultrasonic signal (UWS), and creating a second point in time (t2) according to a point in time when the other one of the two second receiving units (124,126) receives the ultrasonic signal (UWS);
computing a first time interval (T1) equal to a time difference between the first point in time (t1) and the standard point in time (t0), and computing a second time interval (T2) equal to a time difference between the second point in time (t2) and the standard point in time (t0);
computing a first distance (D2) equal to a product of the first time interval (T1) and a transmission speed of the ultrasonic signal (UWS) so as to calculate a distance between one of the second receiving units (124,126) and the cleansing device (10), and computing a second distance (D3) equal to a product of the second time interval (T2) and the transmission speed of the ultrasonic signal (UWS) so as to calculate a distance between the other one of the second receiving units (124,126) and the cleansing device (10); and
computing a position of the cleansing device (10) relative to the base station (12) according to the constant distance (D1), the first distance (D2) and the second distance (D3) three relation.

3. The positioning system of claim 2, wherein a same delay time (DT) of the controlling unit (102) and the computing unit (120) is configured, the delay time (DT) being equal to a time interval between a point in time when the first emitting unit (106) emits the initial signal (RS) and a point in time when the second emitting unit (108) emits the ultrasonic signal (UWS), wherein the delay time (DT) is included in the first and second time intervals (T1,T2), wherein the step of computing the first time interval (T1) and the second time interval (T2) in the computation procedure executed by the computing unit (120) further comprises deducting the delay time (DT) between the first point in time (t1) and the standard point in time (t0) and deducting the delay time (DT) between the second point in time (t2) and the standard point in time (t0).

4. The positioning system of claim 2, wherein the base station (12) further comprises a storing module (128) connected to the computing unit (120) and adapted to store every position of the cleansing device (10) moving relative to the base station (12).

5. The positioning system of claim 1, wherein the first emitting unit (106) is an infrared receiver, and the first receiving unit (122) is an infrared receiver.

6. The positioning system of claim 1, wherein the first emitting unit (106) is a radio frequency transmitter, and the first receiving unit (122) is a radio frequency receiver.
